# EUROPEAN PATENT APPLICATION

(11) **EP 3 324 709 A1**
(43) Date of publication of application: **23.05.2018**
(21) Application number: 16199615.2
(22) Date of filing: 18.11.2016
(51) Int. Cl.: H05B 37/02, B66F 9/00

(54) **ILLUMINATION SYSTEM, METHOD FOR ILLUMINATING AN OBJECT AND VEHICLE**

(71) Applicant: Technische Universität München, 80333 München (DE)
(72) Inventor: Galka, Stefan, 85774 Unterföhring (DE); Keuntje, Christopher, 80807 München (DE); Lechner, Johannes, 80634 München (DE); Molter, Benjamin, 85737 Ismaning (DE)
(74) Representative: Lucke, Andreas

(57) **Abstract**

The disclosure relates to an illumination system comprising a lighting device which can be arranged on a subject, and a controller device which is coupled to the lighting device. The controller device is configured to receive a position of an object, determine a movement state of the subject, and adjust the lighting device such that the object is illuminated, wherein the movement state of the subject is taken into account when adjusting the lighting device. Also, a method for illuminating an object from a subject, and a vehicle comprising an illumination system are disclosed. (Fig. 1)

## Description

The disclosure relates to an illumination system, a method for illuminating an object, and a vehicle.

### Background

Logistics can be seen as the process of planning, implementing and controlling procedures for the efficient and effective transportation and storage of goods, including services and related information, from the point of origin to the point of consumption for the purpose of conforming to customer requirements. It may include inbound, outbound, internal and external movements.

For picking an order to retrieve an article from storage, the following information has to be provided: an identification of the article, a quantity of the article, and a storage position of the article. The information may be provided in a list on paper or on a display. Retrieving the article can be assisted, e.g. may be made more efficient and may avoid picking errors, by providing an optical illumination of the article. Several methods for such illumination are known in the art.

In one approach, a static light is provided at a static position, e.g. a shelf (so-called "pick-by-light"). In this case, one light is needed for each shelf which leads to a large effort for installing the system.

The "pick-by-point" system comprises a movable light source at a static position. The light source can illuminate a certain region around the static position for illuminating an object in this region.

A fixed (non-movable) light with a fixed alignment is arranged on a vehicle in the so-called "pick-by-beamer" system. For every shelf layer, at least one light is needed.

Additional information may be provided to a user by "pick-by-vision" using data glasses, wherein the additional information is displayed in the glasses. The user has to wear the glasses all the time which might become uncomfortable. In addition, the glasses have to be provided with a rechargeable battery with limited capacity.

Document US 8,561,897 B2 discloses a method and an apparatus for determining the location of one or more unit loads in a coordinate space in a facility, comprising an integrated system that identifies a load by reading indicia on the load, determines the position of the indicia in the coordinate space, and stores the indicia position and load identity in a Label Map. A mobile subsystem on each conveying vehicle identifies the location and orientation of that vehicle using a position/orientation sensor, determines the identity of the load, establishes a Target Cube to discriminate the desired load from nearby loads, confirms acquisition of the load, and communicates the information to a fixed-base subsystem. Load identity and the location and orientation of the vehicle when a load is deposited are used to create a Load Map that contains the identity, position and orientation of all identified loads in the coordinate space.

### Summary

It is an object to provide improved technologies for assisting picking of an article in a logistics process. In particular, flexibility of the assistance system shall be increased while costs for installing the assistance system shall be kept low.

An illumination system according to claim 1, a method according to claim 13 and a vehicle according to claim 14 are provided. Further embodiments are subject matter of dependent claims.

In one aspect, an illumination system is disclosed. The system comprises a lighting device which can be arranged on a subject and a controller device which is coupled to the lighting device. The controller device is configured to receive a position of an object, determine a movement state of the subject, and adjust the lighting device such that the object is illuminated. The movement state of the subject is taken into account when adjusting the lighting device.

In another aspect, a method for illuminating an object from a subject is provided. The method comprises steps of providing a lighting device which is arranged on the subject, providing a controller device which is coupled to the lighting device, receiving, by the controller device, a position of the object, determining, by the controller device, a movement state of the subject, and adjusting, by the controller device, the lighting device such that the object is illuminated, wherein the movement state of the subject is taken into account when adjusting the lighting device.

In yet another aspect, a vehicle comprising an illumination system is disclosed.

The subject may be a user who may carry the lighting device, e.g. on a helmet. In one embodiment, the subject may be a vehicle on which the lighting device can be arranged. The illumination system may be provided as a kit for upgrading the vehicle.

The object may be an article which shall be retrieved from storage. A user may receive an order to pick up the object. Information about the position of the object may be provided to the user. For example, the user may drive the vehicle in order to retrieve the object, e.g. from a shelf in the storage. The lighting device illuminates the object, thus providing guidance to the user and improving efficiency of the pick-up process. The object may also be a place where a load shall be stored, e.g. a specific shelf board in a shelf. In this case, the unload process is guided by the illumination system.

The movement state of the subject may comprise a position of the subject, a rotation about a vertical axis of the subject, a velocity of the subject, an acceleration of the subject and / or a direction of motion of the subject. The movement state may be determined by the usage of suitable different sensors and technologies, e.g. sensors and / or technology providing information in real time. Suitable sensors and / or technology may be: radio location (e.g. proprietary radio protocols), 2D cameras, 3D cameras (e.g. a stereo camera or a time-of-flight camera) or one or more laser scanners. These sensors may be combined with markers and the sensor data may be passed to powerful methods like SLAM (simultaneous localization and mapping). Different methods for determining the movement state may be combined in order to increase the precision.

The vehicle may be a ground conveyor, a tugger train, or a forklift truck. The lighting device may be arranged on an upper side of the vehicle, e.g. on top of the vehicle. The lighting device may be fixed to the vehicle, e.g. using a fixing element. The fixing element may be a magnetic element. The controller device may also be arranged on the vehicle. If the illumination system is provided as a kit for upgrading a vehicle, in operation mode (after installing the illumination system) both, the lighting device and the controller device, may be arranged on the vehicle.

The position of the object may be provided as coordinates, e.g. as two dimensional or three dimensional coordinates. The coordinates may be coordinates of a Cartesian coordinate system. The position of the object may be provided by a server. The server may comprise a processor and memory. Information about the object may be stored in the memory of the server. The position of the object may be transmitted from the server to the controller device, e.g. by wireless transmission.

The controller device may be coupled to the lighting device via a wired or a wireless connection (e.g. WLAN (for example WiFi) or Bluetooth). The controller device may comprise a processor and memory. The processor of the controller device may be configured to execute instructions to perform the functions disclosed herein.

The lighting device may be a LED (light emitting diode), an OLED (organic light emitting diode) or a laser.

The lighting device and / or the controller device may be coupled to an energy source of the vehicle for power supply, e.g. a rechargeable battery.

The illumination system may comprise a sensor device which is configured to determine environment conditions, e.g. lighting conditions and / or ground conditions. The sensor device may be coupled to the controller device. The controller device may be further configured to adjust a color and / or an intensity of the lighting device taking into account the environment conditions in order to provide sufficient contrast.

The controller device may be configured to continuously determine the movement state of the subject and to continuously adjust the lighting device taking into account the movement state of the subject such that the object is illuminated by the lighting device while the subject is moving. The adjustment of the lighting device may be performed by the controller device in real time.

The controller device may be configured to determine whether a line-of-sight between the object and the lighting device is present and to adjust the lighting device only after the presence of the line-of-sight is positively determined. The lighting device may be kept switch-off by the controller device as long as the line-of-sight is not established. Only when the line-of-sight is present, the controller device may switch on the lighting device and adjust the lighting device to illuminate the object.

The controller device may be configured to receive a geometrical model of a surrounding environment, and determine the position of the object and / or the movement state of the subject with respect to the geometrical model. The geometrical model may be a three dimensional model of the environment, wherein the environment may be a storage facility or a warehouse. The environment may comprise obstacles, e.g. shelves or racks, which may interrupt the line-of-sight between the lighting device and the object. Position information about the obstacles may be provided in the geometrical model. The controller device may be configured to determine whether the line-of-sight between the object and the lighting device is present based on the geometrical model. The server may store information about a layout of the environment. The layout may be transformed into the geometrical model, e.g. by the server. The position of the object may be provided as coordinates in the geometrical model. Also, the movement state of the subject may be provided as space coordinates and / or speed coordinates in the geometrical model.

The system may further comprise a drive unit, which may be configured to adjust an alignment of the lighting device. The drive unit may be an electric motor. The drive unit may be integrated in the lighting device. The drive unit may receive a control signal provided by the controller device in order to move the lighting device according to the control signal.

The lighting device may be a movable lighting device. The lighting device may be rotatable around two axes or three axes, e.g. by the drive unit.

The lighting device may comprise a lighting element and a movable mirror element. The mirror element may be rotatable around two axes or three axes, e.g. by the drive unit. In this embodiment, the lighting element may be fixed.

The lighting device and / or the controller device may be configured to display information. The information may comprise direction information for a user, e.g. a driver of the vehicle. The direction information may be displayed on a floor. For example, the direction information may be shown several meters (e.g. 2 meters, 3 meters or 5 meters) in front of the subject, e.g. the vehicle. In one embodiment, the geometrical model of the environment is received by the controller device. As long as the line-of-sight between the lighting device and the object is not established, direction information is provided by the lighting device. As soon as the line-of-sight is present, the lighting device switches operation and it is adjusted in order to illuminate the object. Hereby, the driver is guided to the position of the object in a convenient manner. For example, an arrow may be displayed by the lighting device as direction information.

The information may comprise information about the object. For example, a number of objects to be picked up may be shown by the lighting device. The information about the number of objects to be retrieved may be provided from the server to the controller device.

The information may be provided using a rotating mask in front of the lighting device. For example, the mask may comprise the numbers 1 to 9 and / or an arrow. The mask may be controlled by the controller device such that the correct symbol is shown.

The system provides an adjustable lighting device which is arranged on a (movable) subject. The system provides the following advantages. The system is highly flexible. The effort for installing the system is low compared to known methods. A position of the lighting device at the subject (e.g. user or vehicle) may be selected in order to adapt the system to specific requirements.

The system may be used to illuminate boxes to be picked up, a stockyard in floor storage or high rack storage, shelves, ways to an object (e.g. by projecting arrows on the floor), and / or parking positions for the vehicle.

The features disclosed herein in connection with the system are also applicable to the method in an analog manner and vice versa.

### Description of embodiments

Following, exemplary embodiments are described.
Fig. 1 shows a schematic representation of a forklift truck with an illumination system.
Fig. 2 shows a schematic representation of a tugger train with an illumination system.
Fig. 3 shows a schematic representation of another tugger train with an illumination system.
Fig. 4 shows a flow diagram of a method for illuminating on object.

In the figures, like numerals refer to like components.

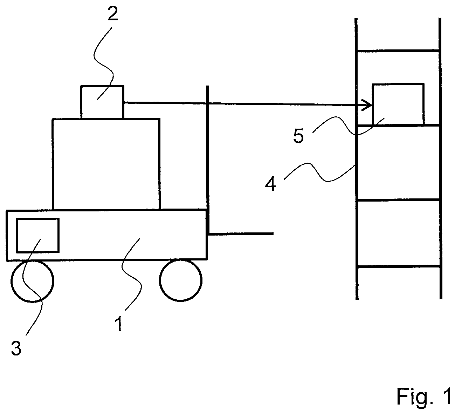

Fig. 1 shows a schematic representation of a forklift truck 1 with an illumination system comprising a lighting device 2 and a controller device 3. The lighting device 2 is arranged on top of the forklift truck 1. A shelf 4 holds an object 5. A driver of the forklift truck receives the order to pick up the object 5. The controller device 3 receives the position of the object 5 in the shelf 4. Also, the controller device 3 determines the movement state of the forklift truck 1 while driving to the object. The controller device 3 controls the lighting device 2 to illuminate the object 5 taking the movement state of the forklift truck 1 into account. The driver is guided visually to the object 5 by the illumination.

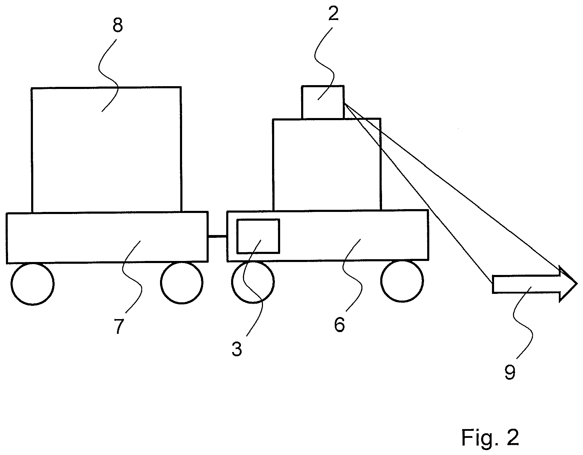

Fig. 2 shows a schematic representation of a tugger train comprising a tow truck 6 and a trailer 7. The tow truck 6 comprises an illumination system. The tow truck 6 pulls the trailer 7 loaded with goods 8. The lighting device 2 projects an arrow 9 on the floor in order to guide the way to an object to be picked up or to a location where the goods 8 shall be unloaded.

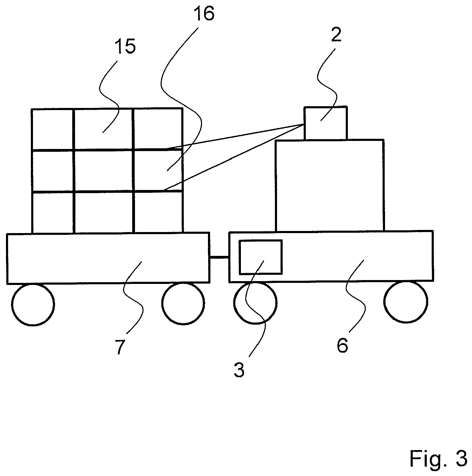

Fig. 3 shows a tugger train similar to the tugger train of Fig. 2. A shelf 15 with several shelf boards 16 is arranged on the trailer 7. Each shelf board 16 may receive one or more goods for transport. The lighting device 2 illuminates a specific shelf board 16 which shall receive the load. Alternatively, if the shelf 15 is filled with several loads, the lighting device may illuminate the shelf board 16 from which the load shall be unloaded.

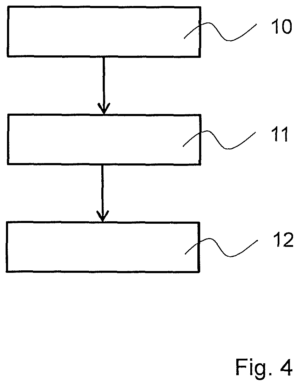

Fig. 4 shows a flow diagram of a method for illuminating on object. A controller device receives a position of an object (step 10), e.g. an object to be picked up. The controller device determines a movement state of the vehicle on which the controller device and a lighting device are arranged (step 11). The lighting device is adjusted by the controller device such that the object is illuminated (step 12). The movement state of the vehicle is taken into account when adjusting the lighting device.

The features disclosed in the specification, the figures and the claims can be relevant for embodiments either alone or in any combination with each other.

## Claims

1. An illumination system, comprising:
- a lighting device which can be arranged on a subject, and
- a controller device which is coupled to the lighting device,
wherein the controller device is configured to
- receive a position of an object,
- determine a movement state of the subject, and
- adjust the lighting device such that the object is illuminated, wherein the movement state of the subject is taken into account when adjusting the lighting device.

2. The system of claim 1, wherein the controller device is configured to continuously determine the movement state of the subject and to continuously adjust the lighting device taking into account the movement state of the subject such that the object is illuminated by the lighting device while the subject is moving.

3. The system of claim 1 or 2, wherein the controller device is configured to determine whether a line-of-sight between the object and the lighting device is present and to adjust the lighting device only after the presence of the line-of-sight is positively determined.

4. The system of one of the preceding claims, wherein the controller device is configured to
- receive a geometrical model of a surrounding environment, and
- determine the position of the object and / or the movement state of the subject with respect to the geometrical model.

5. The system of one of the preceding claims, further comprising a drive unit, wherein the drive unit is configured to adjust an alignment of the lighting device.

6. The system of one of the preceding claims, wherein the lighting device is a movable lighting device.

7. The system of claim 6, wherein the lighting device is rotatable around two axes or three axes.

8. The system of one of the claims 1 to 5, wherein the lighting device comprises a lighting element and a movable mirror element.

9. The system of claim 8, wherein the mirror element is rotatable around two axes or three axes.

10. The system of one of the preceding claims, wherein the lighting device and / or the controller device are configured to display information.

11. The system of claim 10, wherein the information comprises direction information for a user.

12. The system of claim 10 or 11, wherein the information comprises information about the obj ect.

13. A method for illuminating an object from a subject, comprising steps of:
- providing a lighting device which is arranged on the subject,
- providing a controller device which is coupled to the lighting device,
- receiving, by the controller device, a position of the object,
- determining, by the controller device, a movement state of the subject, and
- adjusting, by the controller device, the lighting device such that the object is illuminated, wherein the movement state of the subject is taken into account when adjusting the lighting device.

14. A vehicle comprising an illumination system according to one of the claims 1 to 12.

## Amended claims

### Amended claims in accordance with Rule 137(2) EPC.

1. An illumination system, comprising:
- a lighting device which can be arranged on a subject, wherein the subject is a user or a vehicle, and
- a controller device which is coupled to the lighting device,
wherein the controller device is configured to
- receive a position of an object, and
- determine a movement state of the subject,
**characterized in that**
- the illumination system further comprises a drive unit, wherein the drive unit is configured to adjust an alignment of the lighting device, and
- the controller device is further configured to adjust the lighting device, using the drive unit, such that the object is illuminated, wherein the movement state of the subject is taken into account when adjusting the lighting device.

2. The system of claim 1, wherein the controller device is configured to continuously determine the movement state of the subject and to continuously adjust the lighting device taking into account the movement state of the subject such that the object is illuminated by the lighting device while the subject is moving.

3. The system of claim 1 or 2, wherein the controller device is configured to determine whether a line-of-sight between the object and the lighting device is present and to adjust the lighting device only after the presence of the line-of-sight is positively determined.

4. The system of one of the preceding claims, wherein the controller device is configured to
- receive a geometrical model of a surrounding environment, and
- determine the position of the object and / or the movement state of the subject with respect to the geometrical model.

5. The system of one of the preceding claims, wherein the lighting device is a movable lighting device.

6. The system of claim 5, wherein the lighting device is rotatable around two axes or three axes.

7. The system of one of the claims 1 to 4, wherein the lighting device comprises a lighting element and a movable mirror element.

8. The system of claim 7, wherein the mirror element is rotatable around two axes or three axes.

9. The system of one of the preceding claims, wherein the lighting device and / or the controller device are configured to display information.

10. The system of claim 9, wherein the information comprises direction information for a user.

11. The system of claim 9 or 10, wherein the information comprises information about the object.

12. A method for illuminating an object from a subject, comprising steps of:
- providing a lighting device which is arranged on the subject, wherein the subject is a user or a vehicle,
- providing a drive unit, wherein the drive unit is configured to adjust an alignment of the lighting device,
- providing a controller device which is coupled to the lighting device,
- receiving, by the controller device, a position of the object,
- determining, by the controller device, a movement state of the subject, and
- adjusting, by the controller device, the lighting device, using the drive unit, such that the object is illuminated, wherein the movement state of the subject is taken into account when adjusting the lighting device.

13. A vehicle comprising an illumination system according to one of the claims 1 to 11.
